# FASCICULE DE BREVET EUROPEEN

(11) **EP 3 712 059 B1**
(45) Date de publication et mention de la délivrance du brevet: **21.04.2021**
(21) Numéro de dépôt: 20161742.0
(22) Date de dépôt: 09.03.2020
(51) Int. Cl.: B64C 17/02, B64C 17/04, B64C 39/02

(54) **PROCEDE ET DISPOSITIF POUR DEPLACER UN CENTRE DE GRAVITE D'UN AERONEF**
VERFAHREN UND VORRICHTUNG ZUM VERSCHIEBEN DES SCHWERPUNKTES EINES LUFTFAHRZEUGS
METHOD AND DEVICE FOR DISPLACING A CENTRE OF GRAVITY OF AN AIRCRAFT

(30) Priorité: 18.03.2019 FR 1902752
(43) Date de publication de la demande: 23.09.2020
(73) Titulaire: Airbus Helicopters, 13725 Marignane Cedex (FR)
(72) Inventeur: Bailly, Stéphane, 13480 Cabries (FR)
(74) Mandataire: GPI Brevets

(56) Documents cités:
- CN-A- 106 218 877
- CN-U- 207 725 615
- KR-B1- 101 800 662
- US-A1- 2016 264 234
- US-A1- 2018 141 647
- US-B1- 9 908 619

## Description

La présente invention concerne un procédé et un dispositif pour déplacer un centre de gravité d'un aéronef ainsi qu'un aéronef appliquant ce procédé. Par exemple, l'aéronef peut être un drone à savoir un aéronef sans pilote humain embarqué, cet aéronef pouvant accueillir des marchandises et/ou des passagers.

Un aéronef peut comprendre une cellule et une pluralité d'unités de production de poussée participant chacune à la sustentation de l'aéronef voire aussi à son avancement. Par exemple, chaque unité de production de poussée est portée par un corps de la cellule via une structure de fixation. Chaque unité de production de poussée peut comprendre au moins un rotor et au moins un moteur, chaque rotor comprenant des pales mises en rotation par le moteur. Par exemple, chaque unité de production de poussée peut comprendre un ou plusieurs systèmes de production de poussée. Ainsi, chaque unité de production de poussée peut comprendre par exemple deux rotors mis en mouvement rotatif respectivement par deux moteurs dédiés. Par commodité, l'expression « système à rotor » désigne un système comprenant un rotor muni de pales et d'un moteur, un moteur pouvant être dédié à un ensemble rotor ou pouvant être commun à plusieurs ensembles rotors.

Un aéronef peut comprendre au moins deux unités de production de poussée, et par exemple quatre unités de production de poussée agencées sensiblement au niveau de quatre coins d'un quadrilatère.

Le contrôle de l'aéronef est obtenu en contrôlant chaque unité de production de poussée. Sur un aéronef multirotor muni d'unités de production de poussée ayant des rotors, ce contrôle peut être obtenu en pilotant la vitesse de rotation des rotors et/ou le pas des pales des rotors, le sens de rotation des rotors pouvant être invariable.

En cas de panne d'une unité de production de poussée, l'aéronef peut être déséquilibré. Le risque de déséquilibre augmente lorsque le nombre d'unités de production de poussée diminue.

Le document US 2018/141647 décrit un aéronef quadrirotor. Cet aéronef comporte un ensemble muni de quatre bras portant respectivement les quatre rotors. De plus l'aéronef comporte une tige portant un premier assemblage et éventuellement un deuxième assemblage situés de part et d'autre dudit ensemble selon une direction. Ledit ensemble est mobile par rapport au premier assemblage et au deuxième assemblage le cas échéant.

Le document US 2016/264234 décrit un procédé et un dispositif pour équilibrer un aéronef en ajustant la position de son centre de gravité.

Le document CN 207725615 est un modèle d'utilité relatif à un drone. Ce drone comporte des bras portant des rotors. Un bras peut inclure un moteur linéaire relié à une masse d'équilibrage.

Le document CN 106218877 est relatif à un drone multirotor fonctionnant à l'aide de carburant et muni d'un dispositif et d'ajustement d'attitude.

Les documents US 9908619 et KR 101800662 sont aussi connus.

La présente invention a alors pour objet de proposer un dispositif visant à au moins limiter les risques d'accident par déséquilibre, en particulier suite à une panne d'une unité de production de poussée.

L'invention vise un dispositif de réglage tel que revendiqué pour régler une position d'un centre de gravité d'un aéronef, cet aéronef comportant au moins deux unités de production de poussée voire au moins trois ou quatre unités de production de poussée qui au moins participent chacune à la sustentation voire aussi à l'avancement de l'aéronef. Le dispositif de réglage comprend au moins un organe pesant qui est mobile par rapport à une cellule de l'aéronef, le dispositif de réglage comprenant au moins un actionneur pour déplacer ledit organe pesant.

Ce dispositif de réglage comporte un système avionique configuré pour détecter une panne de chaque unité de production de poussée et pour commander ledit au moins un actionneur afin de déplacer ledit organe pesant en présence d'une panne d'au moins une unité de production de poussée.

L'aéronef peut par exemple mais non exclusivement être un drone.

L'expression « système avionique » désigne un système comprenant notamment un ou plusieurs calculateurs embarqués voire des capteurs divers. Le système avionique peut comprendre un ou plusieurs calculateurs, et par exemple des calculateurs du type présent usuellement sur un aéronef. Le système avionique peut comprendre un calculateur de commandes de vol élaborant notamment des consignes pour suivre une trajectoire et/ou un calculateur de régulation commandant des moteurs pour suivre les consignes émises et/ou un calculateur de surveillance qui surveille le fonctionnement de l'aéronef et/ou un calculateur dédié à l'application de l'invention. Au moins un calculateur peut être redondé par sécurité. Plusieurs calculateurs précités peuvent former un seul et même calculateur.

Chaque unité de production de poussée peut comprendre un ou plusieurs systèmes de production de poussée, et par exemple un ou plusieurs systèmes à rotor.

Dès lors, le dispositif de réglage comporte un organe ou un ensemble d'organes dénommé « système avionique » par commodité qui peut estimer de manière usuelle si une unité de production de poussée est en panne. Une telle panne peut être une panne qui influe sur la poussée générée par au moins un système de production de poussée de l'unité de production de poussée considérée en panne, cette poussée pouvant même devenir indument nulle. Une telle panne peut être qualifiée de « panne de poussée partielle ou totale» mais est dénommée plus simplement « panne ».

Si une unité de production de poussée est jugée en panne, le système avionique ordonne à au moins un actionneur de déplacer au moins un organe pesant pour modifier la position du centre de gravité de l'aéronef.

En effet, une telle panne d'une unité de production de poussée peut modifier l'assiette de cet aéronef ou faire perdre le contrôle de l'aéronef en cas de panne totale de l'unité de production de poussée. Pour y remédier et pour faciliter le pilotage de l'aéronef, la position du centre de gravité est modifiée sans intervention humaine pour être adaptée à la nouvelle configuration de poussée de l'aéronef, et/ou pour anticiper une aggravation de la panne qui aboutirait à une nouvelle configuration de poussée.

Le contrôle de l'aéronef est facilité tant que le centre de gravité de l'aéronef se trouve sensiblement à l'intérieur d'une première zone acceptable délimitée par les unités de production de poussée et notamment présente dans un premier polygone en présence de trois ou plus unités de production de poussée, les coins du premier polygone étant localisés au niveau des unités de production de poussée. En présence d'une panne rendant inopérante une unité de production de poussée, la première zone ne représente plus nécessairement une zone acceptable dans laquelle le centre de gravité de l'aéronef doit se trouver pour éviter un déséquilibre, une nouvelle zone acceptable pouvant être à l'intérieur d'un deuxième polygone délimité par les unités de production de poussée restant en fonctionnement en fonction de leur nombre. Dès lors, le système avionique intervient pour déplacer au moins un organe pesant via au moins un actionneur pour tendre à déplacer la position du centre de gravité de l'aéronef dans la nouvelle zone acceptable. Le déplacement du centre de gravité tend à permettre à un système de pilotage automatique de garder le contrôle de l'aéronef pour des applications où un haut niveau de disponibilité/sûreté est requis, éventuellement avec une perte de performance.

Le dispositif de réglage peut de plus comprendre une ou plusieurs des caractéristiques qui suivent, prises seule ou en combinaison.

Selon un aspect, l'organe pesant peut comporter au moins un organe de stockage d'énergie électrique.

L'organe pesant peut être un organe quelconque. Néanmoins en présence d'un ou plusieurs organes de stockage d'énergie électrique et par exemple sur un aéronef de type drone électrique, chaque organe de stockage d'énergie électrique présente une masse importante avec une forte densité, soit une masse importante et un encombrement restreint. L'utilisation d'au moins un organe de stockage d'énergie électrique en tant qu'organe pesant mobile pour modifier la position du centre de gravité est donc intéressante.

Chaque organe de stockage d'énergie électrique peut comprendre par exemple une ou plusieurs batteries.

Plusieurs organes de stockage d'énergie électrique distincts sont éventuellement susceptibles d'être déplacés seuls et/ou conjointement en fonction de la localisation de chaque unité de production de poussée en panne.

Selon un aspect non revendiqué, ledit actionneur peut comporter au moins un vérin pour déplacer en translation au moins un organe pesant selon au moins un axe. Un vérin peut exercer directement un effort sur un organe pesant ou peut exercer un effort sur un support solidaire d'un organe pesant.

Chaque organe pesant peut être déplacé directement ou indirectement par au moins un vérin.

L'expression « organe peut être déplacé directement ou indirectement par au moins un vérin » signifie qu'un vérin peut agir sur l'organe pesant ou sur un organe lié à l'organe pesant.

Par exemple, un premier vérin éventuellement linéaire peut être lié à au moins un organe pesant pour déplacer cet organe pesant parallèlement à un axe de roulis de l'aéronef. De plus, un deuxième vérin éventuellement linéaire peut être lié à l'ensemble premier vérin/organe pesant pour déplacer l'organe pesant et le premier vérin parallèlement à un axe de tangage de l'aéronef.

Néanmoins, chaque vérin peut permettre de déplacer un organe pesant selon un axe quelconque établi en fonction de la position et du nombre d'unités de production de poussée. Suivant les caractéristiques de l'aéronef, un déplacement sur un seul axe avec un seul vérin peut être envisagé si un tel déplacement est suffisant pour maintenir le centre de gravité de l'aéronef dans une zone acceptable.

Selon un aspect, ledit actionneur peut être dimensionné pour déplacer très rapidement un organe pesant afin d'éviter de rencontrer une période transitoire longue durant laquelle l'aéronef risque d'être déséquilibré.

Selon un aspect, au moins une unité de production de poussée peut être multisystème en étant pourvue d'au moins deux systèmes de production de poussée. Par exemple, une unité de production de poussée peut comprendre deux rotors mis en mouvement rotatif par un même moteur de l'unité de production de poussée ou chacun rotor peut être mis en rotation par son propre moteur dédié. Dès lors, en fonction de la rapidité de l'actionneur, au moins un organe pesant peut être déplacé lorsqu'un ou tous les systèmes de production de poussée d'une unité de production de poussée multisystème sont en panne, à savoir par exemple à l'arrêt ou en fonctionnement dégradé. Par exemple, en présence d'un actionneur très rapide, un organe pesant est déplacé seulement lorsque tous les systèmes de production de poussée d'une unité de production de poussée multisystème sont en panne. Selon un autre exemple, en présence d'un actionneur moins rapide, un organe pesant est déplacé dès qu'un des systèmes de production de poussée d'une unité de production de poussée multisystème est en panne.

Selon l'invention, l'actionneur comporte au moins un organe élastique et un bloqueur, le bloqueur étant commandé par le système avionique pour immobiliser directement ou indirectement ledit organe élastique en l'absence d'une dite panne d'au moins une unité de production de poussée. L'organe élastique peut être un organe qui s'étire ou se rétracte en étant libéré par le bloqueur. L'expression « pour immobiliser directement ou indirectement ledit organe élastique » signifie que le bloqueur peut agir sur l'organe élastique ou sur l'organe pesant ou sur un autre organe lié à l'organe pesant et/ou à l'organe élastique par exemple.

Ainsi un tel actionneur élastique peut comprendre un organe élastique de type ressort. Le ressort ou l'organe pesant peut être bloqué par un doigt en l'absence de panne. Si une panne est détectée, le doigt est déplacé pour libérer le ressort. Par exemple, un électroaimant ou un système pyrotechnique peut être utilisé pour déplacer rapidement le doigt.

Un tel actionneur peut permettre de déplacer très rapidement un organe pesant afin d'éviter de rencontrer une période transitoire longue durant laquelle l'aéronef risque d'être déséquilibré.

Selon un aspect, un organe pesant peut coulisser le long d'une glissière, cette glissière pouvant comprendre des butées par sécurité.

Selon un mode de réalisation, le dispositif de réglage peut comporter un organe pesant fixé à proximité de chaque unité de production de poussée.

Ainsi, le dispositif de réglage comporte au moins autant d'organes pesant que d'unités de production de poussée. Au moins un organe pesant est disposé en l'absence de panne à proximité d'une unité de production de poussé associée. Le terme « associé » fait référence à l'unité de production de poussé située à proximité d'un organe pesant particulier, et inversement. L'expression « à proximité » signifie qu'un organe pesant particulier est plus proche de l'unité de production de poussée associée que des autres unités de production de poussée.

Par exemple, un aéronef peut comprendre un corps central, chaque unité de production de poussée étant reliée au corps central par une structure de fixation ou un équivalent. Dès lors, chaque organe pesant est par exemple porté par une structure de fixation reliée à l'unité de production de poussée associée afin d'être localisé à proximité de cette unité de production de poussée.

Selon une première alternative, chaque organe pesant peut être porté par un coulisseau mobile en translation, le dispositif de réglage comportant un dit actionneur par coulisseau, ledit actionneur étant relié à un coulisseau pour déplacer en translation ce coulisseau.

Par exemple, le coulisseau et l'organe pesant solidaire du coulisseau sont déplacés vers un centre géométrique de l'aéronef en cas de panne de l'unité de production de poussée associée ou sont éloignés de ce centre géométrique en cas de panne de l'unité de production de poussée qui est agencée à l'opposée de l'unité de production de poussée associée.

Par exemple, le dispositif de réglage comporte un organe pesant fixé à proximité de chaque unité de production de poussée, chaque organe pesant étant porté par un coulisseau mobile en translation, ledit dispositif de réglage comportant un dit actionneur par coulisseau, ledit actionneur étant relié à un coulisseau pour déplacer en translation ledit coulisseau.

Selon une deuxième alternative non revendiquée, un dispositif de réglage peut comporter un organe pesant par unité de production de poussée, chaque organe pesant étant solidaire d'un lien mobile relié à ladite cellule, ledit dispositif de réglage étant muni d'un dit actionneur configuré pour attacher chaque organe pesant à la cellule en l'absence d'une dite panne d'au moins une unité de production de poussée.

Chaque lien peut par exemple prendre la forme d'une corde ou un équivalent. Un lien peut aussi prendre la forme d'un bras mobile en rotation par rapport à la cellule sous l'effet de la gravité et par exemple d'un bras de liaison articulé à la cellule par une liaison de type pivot ou rotule à proximité du centre géométrique de l'aéronef. L'actionneur est un dispositif de solidarisation différent du lien qui solidarise un organe pesant à la cellule en l'absence de panne. Un tel système peut permettre de déplacer très rapidement un organe pesant afin d'éviter de rencontrer une période transitoire longue durant laquelle l'aéronef risque d'être déséquilibré

Ainsi, en fonctionnement normal l'organe pesant est fixé par un actionneur à la cellule de l'aéronef à proximité d'une unité de production de poussée, cette unité de production de poussée étant décalée par rapport au centre géométrique de l'aéronef. Dans un mode de panne durant lequel une unité de production de poussée particulière est en panne, l'actionneur libère l'organe pesant associé, cet organe pesant se déplaçant alors par gravité par exemple sensiblement au droit du centre géométrique de l'aéronef en étant guidé par le lien.

Selon une première variante non revendiquée de la deuxième alternative, ledit actionneur peut comporter un anneau dudit organe pesant et un vérin, le vérin étant muni d'une tige mobile en translation, ladite tige pénétrant dans ledit anneau en l'absence d'une dite panne d'au moins une unité de production de poussée.

En présence d'une panne, le vérin est activé pour désengager la tige de l'anneau ce qui permet de libérer éventuellement rapidement l'organe pesant.

Selon une deuxième variante non revendiquée de la deuxième alternative ledit actionneur peut comporter une pince motorisée.

La pince est fermée en l'absence de panne pour serrer l'organe pesant ou un support de l'organe pesant. La pince s'ouvre éventuellement rapidement en présence d'une panne pour libérer l'organe pesant.

Selon une troisième variante non revendiquée de la deuxième alternative, ledit actionneur peut comporter au moins un dispositif pyrotechnique configuré pour lier ledit organe pesant à ladite cellule en l'absence d'une dite panne d'au moins une unité de production de poussée.

Un dispositif pyrotechnique tel que des boulons explosifs peut aussi être utilisé pour désolidariser rapidement l'organe pesant de son support.

Les diverses variantes précédentes peuvent être combinées, un même organe pesant étant maintenu par des actionneurs de technologies différentes.

Par ailleurs, le lien peut être largable.

Si nécessaire, le lien et l'organe pesant porté par ce lien peuvent être largués dans un endroit adéquat juste avant l'atterrissage. En particulier, le largage est d'autant plus possible lorsque l'organe pesant comporte une batterie alimentant électriquement uniquement l'unité de production de poussée en panne.

Par exemple, un moteur de largage électrique, un électroaimant ou un organe pyrotechnique peut être lié à un arbre d'une liaison liant le lien à un corps de l'aéronef. Avant un atterrissage, l'arbre est désengagé de la liaison pour larguer le lien.

De manière complémentaire ou alternative, le lien peut comprendre un bras pliable.

De manière complémentaire ou alternative, l'aéronef peut atterrir sur une station d'accueil comprenant un orifice apte à accueillir l'organe pesant en cas de panne.

De manière complémentaire ou alternative, l'aéronef peut comprendre un train d'atterrissage suffisamment haut pour éviter toute interférence lors de l'atterrissage.

L'invention vise de plus un aéronef muni d'une cellule, ladite cellule portant au moins deux unités de production de poussée qui au moins participent à la sustentation voire à l'avancement de l'aéronef, l'aéronef comportant un dispositif de réglage selon l'invention.

L'invention vise de plus un procédé de stabilisation d'un tel aéronef, ledit aéronef ayant au moins deux unités de production de poussée participant chacune à la sustentation voire à l'avancement de l'aéronef. Ce procédé comporte les étapes suivantes :
- détection d'une panne d'une unité de production de poussée,
- suite à ladite détection d'une panne d'une unité de production de poussée, déplacement d'un organe pesant d'une position courante vers une position de secours pour modifier une position d'un centre de gravité de l'aéronef, par exemple pour recentrer le centre de gravité dans une zone prédéfinie fonction des unités de production de poussée encore en fonctionnement nominal.

Le procédé peut comporter une ou plusieurs des caractéristiques qui suivent, prises seule ou en combinaison.

Ainsi, chaque unité de production de poussée peut comprendre deux systèmes à rotor, chaque système à rotor comprenant un rotor muni d'une pluralité de pales et un moteur, ladite détection d'une panne d'une unité de production comportant une étape de détection d'une panne d'un des deux systèmes à rotor.

Si le déplacement d'un organe pesant est suffisamment rapide, un organe pesant peut être déplacé seulement en présence d'une panne complète d'une unité de production de poussée. La situation transitoire d'instabilité liée à un centre de gravité non adapté sera courte et gérable par le système avionique.

Néanmoins, si une unité de production de poussée comporte plusieurs systèmes de production de poussée différents, la manœuvre de déplacement d'un organe pesant peut être anticipée et réalisée dès qu'un des systèmes de production de poussée est défectueux.

Selon un aspect, la position de secours peut être une position mémorisée dépendant de l'unité de production de poussée en panne, voire du système de production de poussée en panne.

La position de secours à atteindre peut être une position prédéterminée qui dépend de l'unité de production de poussée en panne. Par exemple, pour chaque configuration de panne possible, une position de secours est déterminée par essais, calculs et/ou simulation. Par exemple, sur un aéronef comprenant quatre unités de production de poussée le système avionique peut mémoriser quatre positions de secours associées chacune à la panne d'une seule unité de production de poussée.

En présence d'une panne d'une unité de production de poussée, le système avionique peut alors choisir pour chaque organe pesant la position adaptée à la situation rencontrée dans une liste de positions prédéterminées, chaque position prédéterminée étant une position à atteindre par l'organe pesant lorsqu'une ou plusieurs unités de production de poussée particulières sont en panne.

Eventuellement et en présence de plusieurs organes pesants mobiles, le système avionique peut mémoriser, par exemple dans une mémoire, pour chaque configuration de panne au moins une position de secours à atteindre et le ou les organes pesants à déplacer.

De manière complémentaire ou alternative, ledit procédé peut comporter une étape de calcul avec le système avionique de la position de secours à atteindre en fonction d'un modèle mémorisé prenant au moins en considération l'unité de production de poussée en panne.

Par exemple, ledit modèle mémorisé prend aussi en considération au moins la masse d'une charge utile embarquée dans l'aéronef et/ou la vitesse air ou équivalent de l'aéronef.

La position de secours mémorisée peut être remplacée par une position calculée par le système avionique de l'aéronef.

Par ailleurs, un organe pesant pouvant être fixé à proximité de chaque unité de production de poussée, ledit déplacement comprenant une étape de déplacement de l'organe pesant situé à proximité de l'unité de production de poussée détectée en panne vers un centre géométrique de l'aéronef ou une étape d'éloignement dudit centre géométrique de l'organe pesant qui est situé à proximité d'une unité de production de poussée agencée à l'opposée de l'unité de production de poussée détectée en panne.

L'invention et ses avantages apparaîtront avec plus de détails dans le cadre de la description qui suit avec des exemples donnés à titre illustratif en référence aux figures annexées qui représentent :
[Fig 1] la figure 1, un schéma illustrant un aéronef selon l'invention ayant des unités de production de poussée en fonctionnement,
[Fig 2] la figure 2, un schéma illustrant un exemple d'unité de production de poussée,
[Fig 3] la figure 3, un schéma illustrant un aéronef selon l'invention ayant une unité de production de poussée qui tombe en panne,
[Fig 4] la figure 4, un schéma illustrant un aéronef selon l'invention présentant un déplacement d'un organe pesant suite à la panne d'une unité de production de poussée,
[Fig 5] la figure 5, un schéma illustrant un organe pesant localisée à proximité d'une unité de production de poussée,
[Fig 6] la figure 6, un schéma illustrant un organe pesant déplacé selon l'extérieur de l'aéronef,
[Fig 7] la figure 7, un schéma illustrant un actionneur déplaçant en translation un organe pesant, l'actionneur étant muni d'un bloqueur et d'un organe élastique,
[Fig 8] la figure 8, un schéma illustrant un tel bloqueur d'un actionneur selon la figure 7,
[Fig 9] la figure 9, un schéma illustrant le déplacement d'un organe pesant avec un actionneur selon la figure 7,
[Fig 10] la figure 10, un schéma illustrant un organe pesant solidaire d'un lien mobile,
[Fig 11] la figure 11, un schéma illustrant un actionneur pyrotechnique,
[Fig 12] la figure 12, un schéma illustrant un actionneur ayant une pince fermée,
[Fig 13] la figure 13, un schéma illustrant l'actionneur de la figure 12 avec la pince ouverte,
[Fig 14] la figure 14, un schéma illustrant un actionneur à vérin et anneau,
[Fig 15] la figure 15, un schéma illustrant un aéronef reposant sur une station d'accueil creuse.

Les éléments présents dans plusieurs figures distinctes sont affectés d'une seule et même référence.

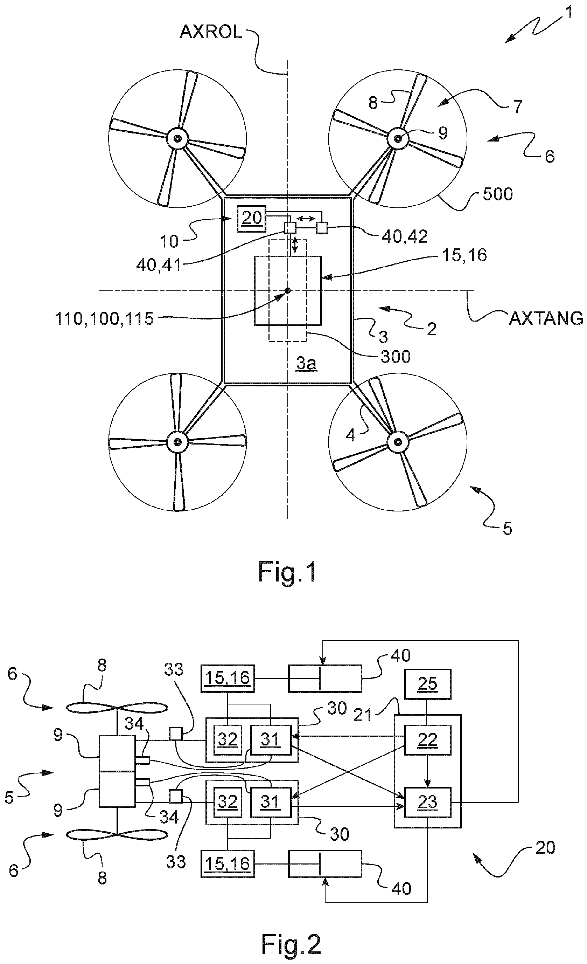

La figure 1 présente un aéronef 1 muni d'un dispositif de réglage 10 selon l'invention. La figure 1 illustre un aéronef 1 du type d'un drone et à titre illustratif un drone multirotor. Néanmoins, l'aéronef 1 peut être par exemple un aéronef avec au moins un pilote embarqué et/ou un avion et/ou un giravion et/ou un aéronef susceptible de décoller et atterrir sensiblement verticalement tel qu'un aéronef connu sous l'acronyme VTOL en langue anglaise.

Indépendamment de cet aspect, l'aéronef 1 comporte une cellule 2. La cellule 2 comporte un corps 3 pouvant être qualifié par commodité de corps central. Le corps 3 s'étend longitudinalement de l'arrière vers l'avant parallèlement à un axe de roulis AXROL de l'aéronef 1 et transversalement parallèlement à un axe de tangage AXTANG de l'aéronef 1. Le corps 3 peut définir un ou plusieurs volumes internes 3a. Chaque volume interne 3a peut être adapté pour le transport de passagers, de sorte que l'aéronef 1 dans son ensemble peut être adapté pour le transport de passagers. Si désiré, le volume interne 3a peut être adapté pour recevoir au moins une partie de l'équipement opérationnel et électrique de l'aéronef 1.

Par ailleurs, l'aéronef 1 peut comprendre un nombre quelconque de deux ou plus unités de production de poussée 5. Comme le montre la Figure 1, l'aéronef 1 peut avoir par exemple quatre unités de production de poussée. Chaque unité de production de poussée 5 exerce une poussée qui participe à la sustentation de l'aéronef 1 voire aussi à son avancement dans toute direction bas, haut, avant, arrière ou latérale.

Chaque unité de production de poussée 5 est reliée au corps 3 de la cellule 2 par au moins un support structural 4. Chaque unité de production de poussée 5 est alors attachée à un support structural 4, ce support structural 4 étant attaché au corps 3. Un tel support structural 4 peut prendre la forme d'un bras éventuellement creux. Par exemple, le corps 3 et les supports structuraux forment une structure en H ou en X sur un aéronef à quatre unités de production de poussée 5.

Par ailleurs, chaque unité de production de poussée 5 peut comprendre au moins un système à rotor 6, l'aéronef 1 étant de fait un aéronef multirotor. D'autres unités de production de poussée sont envisageables. Selon un exemple, chaque unité de production de poussée 5 peut comprendre plusieurs systèmes de production de poussée et par exemple deux systèmes à rotor 6. Chaque système à rotor 6 peut comprendre un rotor 7 muni de pales 8 et un moteur 9, par exemple un moteur électrique. Selon une réalisation, chaque moteur 9 d'une unité de production de poussée 5 est porté par un support structural 4, les pales 8 étant portées par un moteur 9 via un moyeu ou un équivalent.

En outre, chaque unité de production de poussée 5 peut comporter une carène 500, portée par le corps 3 et/ou par un support structural 4.

Par ailleurs, l'aéronef 1 peut être piloté au moyen d'une variation de pas des pales 8 d'au moins un système à rotor 6 ou au moyen d'une variation d'une vitesse de rotation desdites pales 8 ou au moyen d'une combinaison des variations de pas et de vitesse de rotation.

Selon un autre aspect, l'aéronef 1 comporte un dispositif de réglage 10 pour régler une position du centre de gravité 100 de l'aéronef 1 en fonction de l'état de fonctionnement de chaque unité de production de poussée 5.

Ce dispositif de réglage 10 est muni d'au moins un organe dénommé « organe pesant 15 » pour être distingué des autres organes du dispositif. Chaque organe pesant 15 du dispositif de réglage 10 est mobile dans le référentiel de l'aéronef 1. Ainsi, chaque organe pesant 15 peut être porté par exemple par le corps 3, un support structural 4 voire même une unité de production de poussée 5 en l'absence d'une panne.

Au moins un organe pesant 15 peut comprendre un organe de stockage d'énergie électrique 16. Par exemple, l'aéronef 1 peut comporter un organe de stockage d'énergie électrique 16 par unité de production de poussée 5 voire par système de production de poussée et le cas échéant par système de rotor 6, un ou plusieurs voire chaque organe de stockage d'énergie électrique 16 étant mobiles par rapport à la cellule.

Au moins un organe pesant 15 peut être directement rendu mobile et/ou porté par un support lui-même mobile dans le référentiel de l'aéronef. Dans tous les cas, l'organe pesant 15 est rendu mobile dans le référentiel de l'aéronef 1 en pouvant atteindre au moins deux positions distinctes engendrant le positionnement du centre de gravité 100 de l'aéronef 1 dans ce référentiel de l'aéronef 1 dans deux positions différentes.

Le déplacement d'au moins un organe pesant 15 et par suite du centre de gravité 100 de l'aéronef 1 est rendu dépendant du fonctionnement des unités de production de poussée 5.

Dès lors, le dispositif de réglage 10 comporte un système avionique 20 qui est configuré pour détecter une panne susceptible de modifier la poussée générée par au moins une unité de production de poussée 5. Ce système avionique 20 est de plus relié à au moins un actionneur 40 et configuré pour commander au moins un actionneur 40 afin de déplacer au moins un organe pesant 15 en présence d'une telle panne, directement ou en déplaçant un organe solidaire de l'organe pesant 15 par exemple.

La figure 2 illustre un exemple de système avionique 20. Un tel système avionique 20 peut comporter un ou plusieurs calculateurs utilisant des méthodes par exemple usuelles pour détecter la panne d'une unité de production de poussée 5 et commander le cas échéant un ou plusieurs actionneurs 40. Le terme calculateur est à interpréter au sens large, un calculateur pouvant comprendre par exemple au moins un processeur et au moins une mémoire, au moins un circuit intégré, au moins un système programmable, au moins un circuit logique, ces exemples ne limitant pas la portée donnée à l'expression « calculateur ».

Selon l'exemple d'architecture de la figure 2, chaque unité de production de poussée 5 peut comprendre au moins un système à rotor 6, et par exemple deux systèmes à rotor 6 munis chacun d'un moteur électrique 9.

Eventuellement, le système avionique 20 comporte un calculateur de commandes de vol 22 qui détermine une consigne de pilotage pour chaque moteur 9 et/ou pour des systèmes de modification du pas des pales afin de suivre une trajectoire. Cette trajectoire peut être mémorisée ou établie en vol par des moyens divers. Chaque consigne de pilotage peut être établie par un sous-ensemble dénommé « calculateur de commandes de vol 22 » par commodité en prenant en compte des données de vol provenant de capteurs de vol 25 usuels. Par exemple, les consignes de pilotage peuvent prendre la forme de consignes de vitesses de rotation des moteurs électriques 9 des unités de production de poussée 5 ou de consigne de pas des pales 8 des unités de production de poussée 5. Les consignes de pilotage peuvent être déterminées de manière usuelle.

Chaque consigne de pilotage est éventuellement transmise par le calculateur de commandes de vol 22 à une électronique de régulation 30 chargée d'asservir un ou plusieurs moteurs 9 des unités de production de poussée 5 et/ou un dispositif de modification du pas des pales. Par exemple, cet asservissement est réalisé par un calculateur d'asservissement 31 à l'aide de plusieurs boucles de régulation en fonction de mesures provenant de capteurs de mouvement 34, mesurant une position ou une vitesse ou une accélération, installés sur les moteurs 9 ainsi que de capteurs 33 de mesure du courant électrique consommé par chaque moteur électrique 9. Les capteurs de mouvement 34 et les capteurs 33 de mesure du courant électrique sont reliés au calculateur d'asservissement 31. Les capteurs de mouvement 34 peuvent être de différente nature : capteur à effet hall, capteur sin-cos, « resolver », codeur, tachymètre, accéléromètre etc...

De plus, l'électronique de régulation 30 peut comporter un pont de puissance 32 dédié à chaque moteur électrique 9. Les ponts de puissance 32 et le calculateur d'asservissement 31 sont reliés à un organe de stockage d'énergie électrique 16.

Chaque pont de puissance 32 est alors commandé par le calculateur d'asservissement 31 pour laisser circuler le courant électrique désiré vers chaque moteur électrique 9 afin d'atteindre la consigne de pilotage initiale.

Dès lors, un calculateur de surveillance 23 peut être par exemple directement intégré à cette électronique de régulation 30 ou dans un calculateur 21 intégrant le calculateur de commandes de vol 22 selon l'exemple illustré pour déterminer si au moins une des unités de production de poussée 5 est en panne, à savoir pour déterminer si une unité de production de poussée 5 ne génère pas la poussée adéquate ou si un système de production de poussée d'une unité de production de poussée ne génère pas la poussée adéquate. Le calculateur de surveillance 23 peut le cas échéant déterminer si un des systèmes de production de poussée d'une unité de production de poussée est en panne.

Par exemple, le calculateur de surveillance 23 peut signaler une panne moteur en présence d'un courant électrique nul mesuré par un capteur 33 de mesure du courant électrique alors qu'un ordre de transmission d'un courant électrique a été envoyé par le calculateur d'asservissement 31.

De manière alternative ou complémentaire, le calculateur de surveillance 23 peut signaler une panne moteur si le moteur électrique 9 présente une vitesse de rotation déterminée à l'aide d'un capteur de mouvement 34 qui diminue par rapport à une vitesse attendue théorique estimée avec un modèle moteur embarqué. Cette vitesse de rotation mesurée peut être estimée par la dérivée de la position relevée avec un capteur de mouvement 34 de type capteur de position ou directement par un capteur de vitesse tel qu'un tachymètre voire par intégration d'une accélération mesurée avec un capteur de mouvement 34 de type accéléromètre. Le modèle moteur embarqué peut être établi par essais, calculs ou simulations pour fournir une vitesse attendue théorique de rotation du moteur en fonction par exemple des caractéristiques physiques du moteur électrique 9 telles que son inertie, son impédance (résistance, inductance, capacitance), ses frottements, ses constantes électriques et/ou en fonction de la tension électrique d'alimentation du moteur électrique 9, du courant électrique injecté dans le moteur électrique 9, d'efforts externes, et tout autre paramètre nécessaire. Si l'écart entre la vitesse de rotation mesurée et la vitesse attendue est trop important et notamment supérieur à un seuil, le calculateur de surveillance 23 en déduit qu'une panne affecte le système. Dès lors, le calculateur de surveillance 23 commande un ou plusieurs actionneurs 40 pour déplacer au moins un organe pesant 15 et par suite le centre de gravité 100 de l'aéronef 1.

L'aéronef 1 peut comprendre plusieurs capteurs et/ou calculateurs afin de bâtir une information de panne intègre. Des techniques d'architecture commande-moniteur ou architecture votée peuvent être mises en œuvre pour garantir l'intégrité des informations traitées.

Les calculateurs de surveillance 23 utilisés pour la détection de panne peuvent aussi activer directement à partir de leurs sorties les actionneurs 40. Pour ne pas activer intempestivement un actionneur 40, un calculateur de surveillance 23 peut contrôler un pole avec sa voie de commande pour alimenter électriquement une borne « + » d'un actionneur, et peut contrôler un pole avec sa voie de moniteur pour alimenter électriquement une borne « - » de l'actionneur.

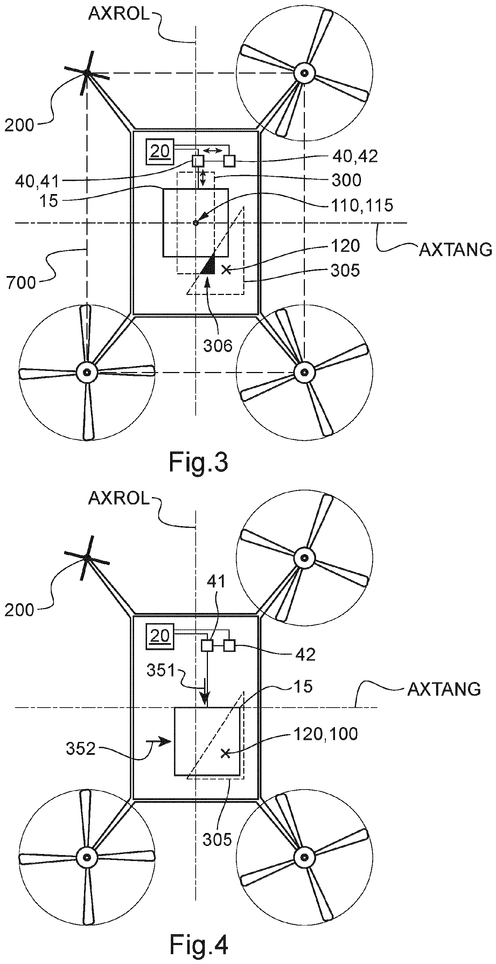

Les figures 3 à 6 illustrent le procédé de l'invention.

En référence à la figure 3, en vol normal toutes les unités de production de poussée 5 fonctionnent correctement. La position courante 115 du centre de gravité 100 de l'aéronef se trouve alors dans une zone initiale 300 acceptable délimitée par un polygone 700 décrit par les unités de production de poussée 5.

Lorsqu'une unité de production de poussée tombe en panne, cette panne étant illustrée par une croix 200, la position du centre de gravité 100 est inchangée. Par contre, le centre de gravité 100 n'est plus localisé dans la nouvelle zone acceptable 305 qui est fonction des unités de production de poussée restants en fonctionnement nominal. L'aéronef risque d'être déséquilibré. Il est à noter qu'une zone 306 peut être commune à l'ancienne zone acceptable 300 et à la nouvelle zone acceptable 305.

Selon le procédé appliqué, le système avionique 20 détecte la panne d'une unité de production de poussée.

Dès lors et en référence à la figure 4, le système avionique 20 déplace au moins un organe pesant 15 pour placer le centre de gravité 100 dans une position de secours 120 localisée dans la nouvelle zone acceptable 305.

Selon un exemple non revendiqué, un actionneur 40 comporte au moins un vérin pour déplacer en translation au moins un organe pesant 15 selon au moins un axe. Selon l'exemple illustré sur la figure 4, le système avionique commande l'allongement d'un premier vérin 41 selon la flèche 351 parallèlement à l'axe de roulis AXROL et la rétraction un deuxième vérin 42 selon la flèche 352 parallèlement à l'axe de tangage AXTANG.

En présence d'une unité de production de poussée 5 comprenant au moins deux systèmes de production de poussée exerçant chacun une poussée tel que deux systèmes à rotor 6 par exemple, au moins un organe pesant 15 peut être déplacé dès qu'un des systèmes de production de poussée est en panne afin d'amener le centre de gravité 100 dans la zone 306, commune à la zone acceptable 300 et à la zone acceptable 305.

Par ailleurs, la position de secours 120 peut être une position mémorisée ou calculée en fonction d'un modèle mémorisé. Un tel modèle mémorisé peut comprendre par exemple au moins une équation mathématique et/ou au moins un tableau. Un tel modèle mémorisé peut déterminer la position de secours à atteindre en fonction au moins de l'unité de production de poussée 5 en panne voire de la masse d'une charge utile embarquée dans l'aéronef 1 et/ou de la vitesse d'avancement de l'aéronef 1.

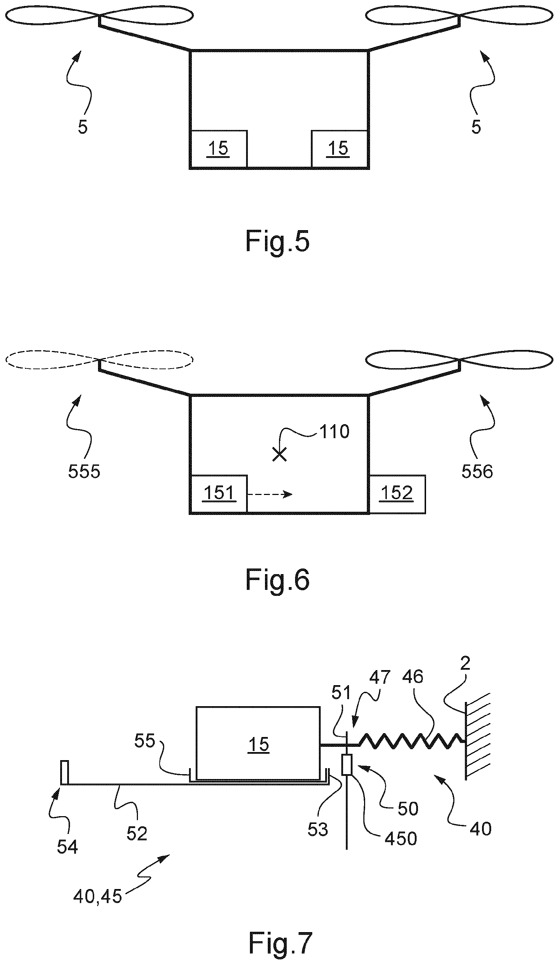

Par ailleurs et en référence à la figure 5, au moins un organe pesant 15 peut être fixé à proximité de chaque unité de production de poussée 5.

En référence à la figure 6, suite à une panne d'une unité de production de poussée 555, le système avionique peut éloigner d'un centre 110 géométrique de l'aéronef l'organe pesant 152 situé à proximité de l'unité de production de poussée 556 à l'opposée de l'unité de production de poussée 555 en panne, et par exemple sensiblement symétrique à l'unité de production de poussée 555 en panne au regard du centre géométrique 110. Par exemple, un organe pesant 152 est disposé sur un coulisseau mobile en translation à cet effet.

Alternativement et/ou en complément, l'organe pesant 151 situé à proximité de l'unité de production de poussée 555 détectée en panne peut être à l'inverse déplacé vers le centre géométrique 110 de l'aéronef 1.

Un actionneur non revendiqué peut comprendre un vérin électrique.

Les figures 7 à 14 illustrent diverses réalisations d'un actionneur.

La figure 7 illustre un actionneur 40 apte à déplacer en translation un organe pesant 15, un organe pesant 15 étant éventuellement fixé à proximité de chaque unité de production de poussée 5. Cet actionneur 40 est un actionneur à longueur variable qui comporte au moins un organe élastique 46 et un bloqueur 50. Par exemple, l'organe élastique 46 comporte un ressort qui s'étend d'une première extrémité du ressort portée par la cellule 2 jusqu'à une deuxième extrémité du ressort. La deuxième extrémité du ressort est reliée à un organe pesant 15 ou à un coulisseau 55 portant l'organe pesant 15 via un organe de liaison 47.

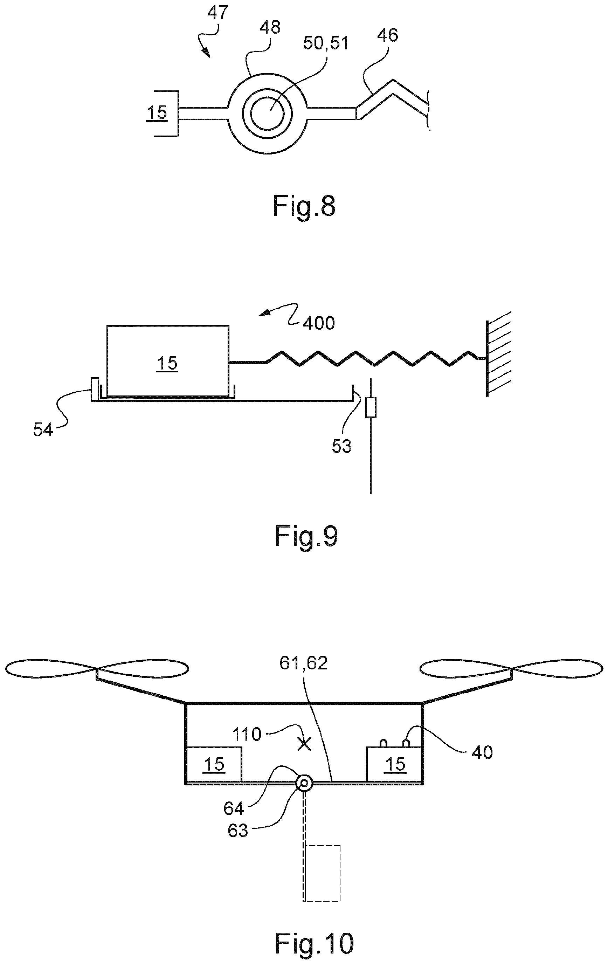

Dès lors et en référence à la figure 8, le bloqueur 50 peut comprendre un doigt 51 mobile en translation pour entrer ou sortir d'un anneau 48 de l'organe de liaison 47. Selon d'autres alternatives, le bloqueur 50 peut coopérer avec le coulisseau 55 ou l'organe pesant 15 voire l'organe élastique 46 de rappel. Le doigt 51 peut être commandé par un vérin 450 par exemple mains non exclusivement électrique ou encore un électroaimant par exemple.

Par défaut, l'organe élastique peut être comprimé. En référence à la figure 9, en présence d'une panne le doigt 51 est désengagé de l'anneau 48. Dès lors, l'organe élastique 46 se détend et pousse l'organe pesant 15 selon la flèche 400. L'inverse est aussi possible, l'organe élastique étant étiré par défaut et se rétractant suite au désengagement du doigt 51.

Eventuellement, l'organe pesant 15 ou un coulisseau 55 portant l'organe pesant 15 se déplace le long d'une glissière 52, cette glissière 52 pouvant posséder deux butées 53, 54 entre lesquelles se déplace l'organe pesant 15 ou le coulisseau 55.

La figure 10 illustre un dispositif de réglage 10 qui comporte un organe pesant 15 éventuellement fixé à proximité de chaque unité de production de poussée 5.

Chaque organe pesant 15 est solidaire d'un lien 61 non revendiqué mobile dans le référentiel de l'aéronef 1. Ce lien 61 peut prendre diverses formes et peut être par exemple relié la cellule 2 à proximité de son centre géométrique 110.

Le lien 61 comporte par exemple un bras de liaison 62 qui est articulé à la cellule 2. Par exemple, le bras de liaison 62 est articulé à la cellule 2 par une liaison de type pivot ou une liaison de type rotule. Eventuellement, le bras de liaison 62 comporte une chape ou une bille de rotule traversée par un arbre 63, cet arbre 63 étant porté par un élément 64 de la cellule 2. Eventuellement, un moteur, un électroaimant ou équivalent peut rendre l'arbre 63 mobile en translation afin de pouvoir désengager l'arbre 63 du bras de liaison 62 rendant ainsi le lien 61 largable.

En fonctionnement normal, l'organe pesant 15 porté par le lien 61 est attaché à la cellule 2 par un actionneur 40. En cas de panne, l'actionneur 40 libère l'organe pesant 15 qui se déplace par gravité en étant guidé par le lien 61.

Selon la figure 10 l'actionneur 40 peut comprendre un électroaimant.

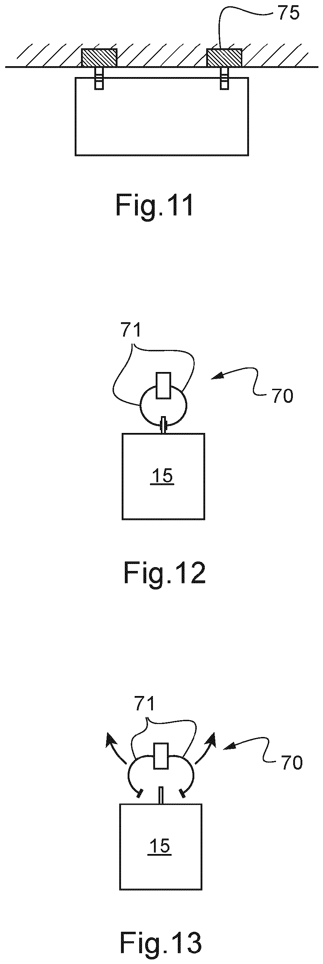

Selon la figure 11, l'actionneur 40 comporte au moins un dispositif pyrotechnique 75, et en particulier deux boulons explosifs selon l'exemple illustré.

Selon la figure 12, l'actionneur 40 comporte une pince 70 motorisée électrique. La pince 70 comporte deux branches 71 qui enserrent une partie de l'organe pesant 15 ou d'un support solidaire de l'organe pesant 15 sur la figure 12, la pince 70 étant ouverte sur la figure 13.

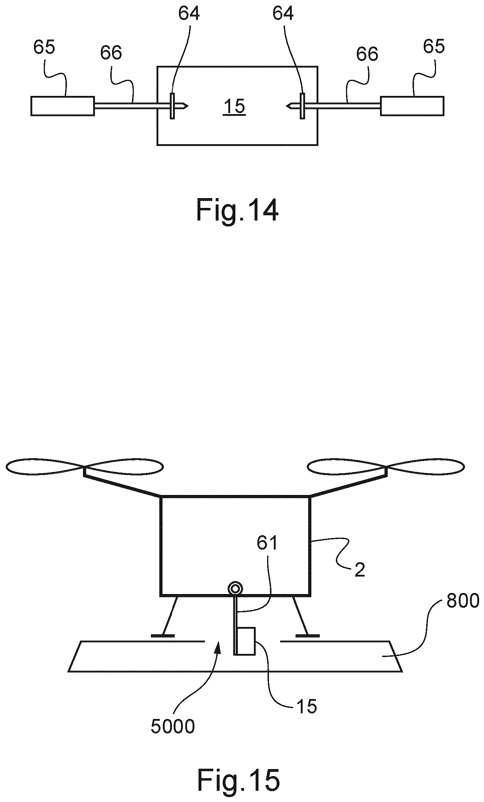

Selon la figure 14, un actionneur 40 peut comporter un anneau 67 solidaire d'un organe pesant 15 ou d'un support de l'organe pesant 15 et un vérin 65, par exemple mais non exclusivement électrique. Le vérin 65 est muni d'une tige 66 mobile en translation, la tige 66 étant engagée dans l'anneau 67 en l'absence d'une panne. Selon l'exemple illustré, deux actionneurs 40 sont utilisés.

Par ailleurs et en référence à la figure 15, le lien 61 peut se trouver sous la cellule 2 suite à une panne. Le lien 61 peut être largué en vol pour éviter une interférence avec le sol ou avec une station d'accueil 800 lors d'un atterrissage.

Eventuellement, une telle station d'accueil 800 peut aussi comprendre un renfoncement 5000 pour éviter une telle interférence.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Dispositif de réglage (10) pour régler une position d'un centre de gravité (100) d'un aéronef (1), ledit aéronef (1) comportant au moins deux unités de production de poussée (5) qui au moins participent à la sustentation de l'aéronef (1), le dispositif de réglage (10) comprenant au moins un organe pesant (15) qui est mobile par rapport à une cellule (2) de l'aéronef (1), le dispositif de réglage (10) comprenant au moins un actionneur (40) pour déplacer ledit organe pesant (15), ledit au moins un actionneur (40) étant commandé afin de déplacer ledit organe pesant (15) en présence d'une panne d'au moins une unité de production de poussée (5)
**caractérisé en ce que** le dispositif de réglage (10) comporte un système avionique (20) configuré pour détecter une panne de chaque unité de production de poussée (5) et pour commander ledit au moins un actionneur (40) afin de déplacer ledit organe pesant (15) en présence d'une panne d'au moins une unité de production de poussée (5), ledit actionneur (40) comportant au moins un organe élastique (46) et un bloqueur (50), le bloqueur (50) étant commandé par ledit système avionique (20) pour immobiliser directement ou indirectement ledit organe élastique (46) en l'absence d'une dite panne d'au moins une unité de production de poussée (5).

2. Dispositif de réglage selon la revendication 1,
**caractérisé en ce que** ledit organe pesant (15) comporte au moins un organe de stockage d'énergie électrique (16).

3. Dispositif de réglage selon l'une quelconque des revendications 1 à 2,
**caractérisé en ce que** ledit dispositif de réglage (10) comporte un organe pesant (15) fixé à proximité de chaque unité de production de poussée (5), chaque organe pesant (15) étant porté par un coulisseau (55) mobile en translation, ledit dispositif de réglage (10) comportant un dit actionneur (40) par coulisseau (55), ledit actionneur étant relié à un coulisseau (55) pour déplacer en translation ledit coulisseau (55).

4. Aéronef (1) muni d'une cellule (2), ladite cellule (2) portant au moins deux unités de production de poussée (5) qui au moins participent à la sustentation de l'aéronef (1),
**caractérisé en ce que** ledit aéronef (1) comporte un dispositif de réglage (10) selon l'une quelconque des revendications 1 à 3.

5. Procédé de stabilisation d'un aéronef (1) selon la revendication 4, ledit aéronef (1) ayant au moins deux unités de production de poussée (5) participant chacune au moins à la sustentation de l'aéronef (1),
**caractérisé en ce que** le procédé comporte les étapes suivantes :
- détection d'une panne d'une unité de production de poussée (5) avec le système avionique,
- suite à ladite détection d'un panne d'une unité de production de poussée (5), déplacement avec ledit actionneur sur ordre dudit système avionique d'un organe pesant (15) d'une position courante (115) vers une position de secours (120) pour modifier une position d'un centre de gravité (100) de l'aéronef (1).

6. Procédé selon la revendication 5,
**caractérisé en ce que** chaque unité de production de poussée (5) comprenant deux systèmes à rotor (6), chaque système à rotor (6) comprenant un rotor (7) muni d'une pluralité de pales (8) et d'un moteur (9), ladite détection d'une panne d'une unité de production de poussée (5) comporte une étape de détection d'une panne d'un des deux systèmes à rotor (6).

7. Procédé selon l'une quelconque des revendications 5 à 6,
**caractérisé en ce que** ladite position de secours (120) est une position mémorisée dépendant de l'unité de production de poussée (5) en panne.

8. Procédé selon l'une quelconque des revendications 5 à 7,
**caractérisé en ce que** ledit procédé comporte une étape de calcul avec le système avionique (20) de ladite position de secours en fonction d'un modèle mémorisé prenant au moins en considération l'unité de production de poussée (5) en panne.

9. Procédé selon la revendication 8,
**caractérisé en ce que** ledit modèle mémorisé prend au moins en considération la masse d'une charge utile embarquée dans l'aéronef (1) ou la vitesse d'avancement de l'aéronef (1).

10. Procédé selon l'une quelconque des revendications 5 à 9,
**caractérisé en ce qu'**un organe pesant (15) est fixé à proximité de chaque unité de production de poussée (5), ledit déplacement comprenant une étape de déplacement de l'organe pesant (15) situé à proximité de l'unité de production de poussée (5) détectée en panne vers un centre (110) de l'aéronef (1) ou une étape de d'éloignement dudit centre (110) de l'organe pesant (15) qui est situé à proximité d'une unité de production de poussée (5) à l'opposée de l'unité de production de poussée (5) détectée en panne.

## Patentansprüche

1. Stellvorrichtung (10) zum Einstellen einer Position eines Schwerpunkts (100) eines Luftfahrzeugs (1), wobei das Luftfahrzeug (1) mindestens zwei Schuberzeugungseinheiten (5) aufweist, die am Auftrieb des Flugzeugs (1) zumindest beteiligt sind, die Stellvorrichtung (10) mindestens ein relativ zu einer Luftfahrzeugzelle (2) des Luftfahrzeugs (1) bewegliches Lastelement (15) umfasst, die Stellvorrichtung (10) mindestens einen Aktuator (40) zum Bewegen des Lastelements (15) umfasst, wobei der mindestens eine Aktuator (40) gesteuert ist, um das Lastelement (15) bei einem Ausfall mindestens einer Schuberzeugungseinheit (5) zu bewegen,
**dadurch gekennzeichnet, dass** die Stellvorrichtung (10) ein Avioniksystem (20) umfasst, das konfiguriert ist, um einen Ausfall jeder Schuberzeugungseinheit (5) zu erkennen und den mindestens einen Aktuator (40) zu steuern, um das Lastelement (15) bei Vorliegen einer Störung mindestens einer Schuberzeugungseinheit (5) zu bewegen, wobei der Aktuator (40) mindestens ein elastisches Element (46) und einen Blocker (50) umfasst, wobei der Blocker (50) durch das Avioniksystem (20) gesteuert ist, um das elastische Element (46) direkt oder indirekt im Falle einer Störung mindestens einer Schuberzeugungseinheit (5) direkt oder indirekt zu immobilisieren.

2. Stellvorrichtung nach Anspruch 1,
**dadurch gekennzeichnet, dass** das Lastelement (15) mindestens ein elektrisches Energiespeicherelement (16) umfasst.

3. Stellvorrichtung nach einem der Ansprüche 1 bis 2,
**dadurch gekennzeichnet, dass** die Stellvorrichtung (10) ein Lastelement (15) umfasst, das in der Nähe jeder Schuberzeugungseinheit (5) befestigt ist, dass jedes Lastelement (15) von einem translatorisch beweglichen Schlitten (55) getragen ist, dass die Stellvorrichtung (10) ein Stellglied (40) pro Schlitten (55) umfasst, und dass das Stellglied mit einem Schlitten (55) verbunden ist, um den Schlitten (55) translatorisch zu bewegen.

4. Luftfahrzeug (1) mit einer Zelle (2), wobei die Zelle (2) mindestens zwei Schuberzeugungseinheiten (5) trägt, die am Auftrieb des Luftfahrzeugs (1) zumindest beteiligt sind,
**dadurch gekennzeichnet, dass** das Luftfahrzeug (1) eine Stellvorrichtung (10) nach einem der Ansprüche 1 bis 3 aufweist.

5. Verfahren zum Stabilisieren eines Luftfahrzeugs (1) nach Anspruch 4, wobei das Luftfahrzeug (1) mindestens zwei Schuberzeugungseinheiten (5) aufweist, die jeweils am Auftrieb des Luftfahrzeugs (1) zumindest beteiligt sind,
**dadurch gekennzeichnet, dass** das Verfahren die folgenden Schritte umfasst:
- Erkennen einer Störung einer Schuberzeugungseinheit (5) mit dem Avioniksystem,
- nach dem Erkennen einer Störung einer Schuberzeugungseinheit (5), Bewegen eines Lastelements (15) mit dem Aktuator auf Befehl des Avioniksystems von einer aktuellen Position (115) in eine Notfallposition (120), um eine Position eines Schwerpunkts (100) des Luftfahrzeugs (1) zu ändern.

6. Verfahren nach Anspruch 5,
**dadurch gekennzeichnet, dass** jede Schuberzeugungseinheit (5) zwei Rotorsysteme (6) umfasst, wobei jedes Rotorsystem (6) einen Rotor (7), der mit einer Mehrzahl von Blättern (8) versehen ist, und ein Triebwerk (9) umfasst, wobei das Erfassen einer Störung einer Schuberzeugungseinheit (5) einen Schritt des Erfassens einer Störung von einem der beiden Rotorsysteme (6) umfasst.

7. Verfahren nach einem der Ansprüche 5 bis 6,
**dadurch gekennzeichnet, dass** die Notfallposition (120) eine gespeicherte Position ist, die von der gestörten Schuberzeugungseinheit (5) abhängig ist.

8. Verfahren nach einem der Ansprüche 5 bis 7,
**dadurch gekennzeichnet, dass** das Verfahren einen Schritt umfasst, bei dem mit dem Avioniksystem (20) die Notfallposition gemäß einem gespeicherten Modell berechnet wird, wobei zumindest die gestörte Schuberzeugungseinheit (5) berücksichtigt wird.

9. Verfahren nach Anspruch 8,
**dadurch gekennzeichnet, dass** das gespeicherte Modell zumindest das Gewicht einer in dem Luftfahrzeug (1) mitgeführten Nutzlast oder die Fortbewegungsgeschwindigkeit des Luftfahrzeugs (1) berücksichtigt.

10. Verfahren nach einem der Ansprüche 5 bis 9,
**dadurch gekennzeichnet, dass** in der Nähe jeder Schuberzeugungseinheit (5) ein Lastelement (15) angebracht ist, wobei die Verschiebung einen Schritt des Bewegens des Lastelements (15), das sich in der Nähe der als gestört erkannten Schuberzeugungseinheit (5) befindet, zu einem Zentrum (110) des Flugzeugs (1) hin oder einen Schritt des Bewegens des Lastelement (15), das sich in der Nähe einer der als gestört erkannten Schuberzeugungseinheit (5) gegenüberliegenden Schuberzeugungseinheit (5) befindet, weg von diesem Zentrum (110) umfasst.

## Claims

1. Adjustment device (10) for adjusting the position of a centre of gravity (100) of an aircraft (1), the said aircraft (1) having at least two thrust production units (5) which at least contribute to the lift of the aircraft (1), the adjustment device (10) comprising at least one heavy member (15) which is mobile relative to a frame (2) of the aircraft (1), the adjustment device (10) comprising at least one actuator (40) for displacing the said heavy member (15), the said at least one actuator (40) being controlled in order to displace the said heavy member (15) in the event of a failure of at least one thrust production unit (5),
**characterised in that** the adjustment device (10) has an avionic system (20) configured to detect a failure of each thrust production unit (5) and to control the said at least one actuator (40) in order to displace the said heavy member (15) in the event of a failure of at least one thrust production unit (5), the said actuator (40) having at least one resilient member (46) and a retainer (50), the retainer (50) being controlled by the said avionic system (20) in order to immobilise the said resilient member (46) directly or indirectly in the absence of a said failure of at least one thrust production unit (5).

2. The adjustment device as claimed in Claim 1,
**characterised in that** the said heavy member (15) has at least one electrical energy storage member (16).

3. The adjustment device as claimed in either of claims 1 and 2,
**characterised in that** the said adjustment device (10) has a heavy member (15) fixed in proximity to each thrust production unit (5), each heavy member (15) being carried by a slide (55) which is mobile in translation, the said adjustment device (10) having one said actuator (40) per slide (55), the said actuator being connected to a slide (55) in order to displace the said slide (55) in translation.

4. Aircraft (1) provided with a frame (2), the said frame (2) carrying at least two thrust production units (5) which at least contribute to the lift of the aircraft (1), **characterised in that** the said aircraft (1) has an adjustment device (10) according to any one of Claims 1 to 3.

5. Method for stabilising an aircraft (1) according to Claim 4, the said aircraft (1) having at least two thrust production units (5), each contributing at least to the lift of the aircraft (1),
**characterised in that** the method includes the following steps:
- detecting a failure of a thrust production unit (5) with the avionic system,
- following the said detection of a failure of a thrust production unit (5), displacing, with the said actuator, at the instigation of the said avionic system, a heavy member (15) from a normal position (115) to an emergency position (120) in order to modify a position of a centre of gravity (100) of the aircraft (1).

6. Method according to Claim 5,
**characterised in that**, each thrust production unit (5) comprising two rotor systems (6), each rotor system (6) comprising a rotor (7) provided with a plurality of blades (8) and with a motor (9), the said detection of a failure of a thrust production unit (5) includes a step of detecting a failure of one of the two rotor systems (6).

7. Method according to either of Claims 5 and 6,
**characterised in that** the said emergency position (120) is a position stored in memory, which depends on the thrust production unit (5) which has failed.

8. Method according to any one of Claims 5 to 7,
**characterised in that** the said method includes a step of calculating, with the avionic system (20), the said emergency position as a function of a model stored in memory, which takes into consideration at least the thrust production unit (5) which has failed.

9. Method according to Claim 8,
**characterised in that** the said model stored in memory takes into consideration at least the mass of a payload on board the aircraft (1) or the speed of advance of the aircraft (1).

10. Method according to any one of Claims 5 to 9,
**characterised in that** a heavy member (15) is fixed in proximity to each thrust production unit (5), the said displacement comprising a step of displacing the heavy member (15) located in proximity to the thrust production unit (5) detected as having failed towards a centre (110) of the aircraft (1) or a step of moving, away from the said centre (110), the heavy member (15) which is located in proximity to a thrust production unit (5) on the opposite side from the thrust production unit (5) detected as having failed.
